# EUROPEAN PATENT APPLICATION

(11) **EP 4 793 893 A1**
(43) Date of publication of application: **19.08.2026**
(21) Application number: 24943664.3
(22) Date of filing: 22.08.2024
(51) Int. Cl.: G06T 11/00

(54) **METHOD FOR GENERATING IMAGE, APPARATUS, DEVICE, MEDIUM AND PROGRAM PRODUCT**

(71) Applicant: Beijing Zitiao Network Technology Co., Ltd., Beijing 100190 (CN)
(72) Inventor: PAN, Ruidong, Beijing 100028 (CN); MENG, Quan, Beijing 100028 (CN); WANG, Saisai, Beijing 100028 (CN); CHEN, Yating, Beijing 100028 (CN); WANG, Yuzhou, Beijing 100028 (CN); KANG, Hongwei, Beijing 100028 (CN)
(74) Representative: Marks & Clerk LLP
(86) International application number: PCT/CN2024/113950
(87) International publication number: WO 2026/040051

(57) **Abstract**

Embodiments of the present disclosure relate to a method and apparatus for generating an image, a device, a medium and a program product. The method comprises obtaining target object information for a target object, the target object information including an original descriptive text for the target object and an original image of the target object. The method also comprises determining, based on the original descriptive text and the original image, an appearance descriptive text for the target object. The method further comprises generating, based on the original descriptive text and the appearance descriptive text, a scenario descriptive text of a scenario where the target object is applied. The method also comprises generating, based the scenario descriptive text, a scenario image of the scenario where the target object is applied. By using the text description and the image information related to the target object, the method can generate more accurate appearance description and application scenarios of the object. The generated image is accordingly more accurate. In addition, the method improves the efficiency of image generation and enhances the user experience.

## Description

### FIELD

Embodiments of the present disclosure generally relate to the field of image processing, and more specifically, to method and apparatus, device, medium and program product for generating an image.

### BACKGROUND

Machine learning has become increasingly important in people's daily life and is gradually an indispensable tool for people. A growing number of tasks are processed by the machine learning model. For example, text processing task, image processing task and audio processing task etc. are carried out using the machine learning model. Especially in multimodal data processing tasks, the advantages of machine learning models with multimodal data processing capabilities are becoming more and more obvious.

With soaring development of machine learning technology, the procedure for processing various types of multimodal data has become more quickly and accurately. For example, in an image processing task, a pre-deployed large language model may be utilized to assist the users to handle image-related operations. In addition, to satisfy development needs of image processing technology, the large language model has been applied more extensively in the aspect of image generation.

### SUMMARY

Embodiments of the present disclosure provide a method and apparatus, a device, a medium and a program product for generating an image.

In accordance with a first aspect of the present disclosure, there is provided a method for generating an image. The method comprises obtaining target object information for a target object, and the target object information comprises an original descriptive text for the target object and an original image of the target object. The method also comprises determining, based on the original descriptive text and the original image, an appearance descriptive text for the target object. The method further comprises generating, based on the original descriptive text and the appearance descriptive text, a scenario descriptive text of a scenario where the target object is applied. The method also comprises generating, based the scenario descriptive text, a scenario image of the scenario where the target object is applied.

In accordance with a second aspect of the present disclosure, there is provided an apparatus for generating an image. The apparatus comprises a target object information obtaining module configured to obtain target object information for a target object, and the target object information comprises an original descriptive text for the target object and an original image of the target object; an appearance descriptive text determination module configured to determine, based on the original descriptive text and the original image, an appearance descriptive text for the target object; a scenario descriptive text generation module configured to generate, based on the original descriptive text and the appearance descriptive text, a scenario descriptive text of a scenario where the target object is applied; and a scenario image generation module configured to generate, based the scenario descriptive text, a scenario image of the scenario where the target object is applied.

In accordance with a third aspect of the present disclosure, there is provided an electronic device, comprising at least one processor; and a storage apparatus for storing at least one program, the at least one program, when executed by the at least one processor, causing the at least one processor to perform the method according to the first aspect of the present disclosure.

In accordance with a fourth aspect of the present disclosure, there is provided a computer-readable storage medium stored thereon with computer programs, the computer programs, when executed by a processor, causing the processor to perform the method according to the first aspect of the present disclosure.

In accordance with a fifth aspect of the present disclosure, there is provided a computer program product. The computer program product includes computer programs, which computer programs, when executed by a processor, causing the processor to perform the method according to the first aspect of the present disclosure.

It should be appreciated that the contents described in this Summary are not intended to identify key or essential features of the embodiments of the present disclosure, or limit the scope of the present disclosure. Other features of the present disclosure will be understood more easily through the following description.

### BRIEF DESCRIPTION OF THE DRAWINGS

Through the following detailed description of the example embodiments of the present disclosure with reference to the accompanying drawings, the above and other objectives, features, and advantages of the present disclosure will become more apparent. In the example embodiments of the present disclosure, the same reference sign usually indicates the same component.
FIG. 1 illustrates a schematic diagram of an example environment in which the device and/or method according to some embodiments of the present disclosure can be implemented;
FIG. 2 illustrates schematic diagram of a flowchart for obtaining the object information of the target object according to embodiments of the present disclosure;
FIG. 3 illustrates a schematic diagram of an example of the appearance descriptive text for generating an image according to some embodiments of the present disclosure;
FIG. 4 illustrates a schematic diagram of another example of the appearance descriptive text for generating an image according to some embodiments of the present disclosure;
FIG. 5 illustrates a schematic diagram of the additional information for generating an image according to some embodiments of the present disclosure;
FIG. 6 illustrates a schematic diagram of an example of the scenario descriptive text for generating the image according to some embodiments of the present disclosure;
FIG. 7 illustrates a schematic diagram of an example procedure for generating an image according to some embodiments of the present disclosure;
FIG. 8 illustrates a schematic diagram of another example procedure for generating an image according to some embodiments of the present disclosure;
FIG. 9 illustrates a schematic diagram of a further example procedure for generating an image according to some embodiments of the present disclosure;
FIG. 10 illustrates a schematic diagram of an example for segmenting and combining images during image generation according to some embodiments of the present disclosure;
FIG. 11 illustrates a schematic diagram of an example method for generating an image according to embodiments of the present disclosure;
FIG. 12 illustrates a schematic block diagram of an apparatus for generating an image according to embodiments of the present disclosure;
FIG. 13 illustrates a schematic block diagram of an example device adapted to implement a plurality of embodiments of the present disclosure.

In each drawing, same or corresponding reference sign indicates the same or corresponding component.

### DETAILED DESCRIPTION OF EMBODIMENTS

It is to be understood that data involved in the technical solutions of the present disclosure, including but not limited to data per se, and acquisition or use of the data, should follow requirements of corresponding laws, regulations and rules. In response to receiving an active request from the users, prompt information is sent to the users to clearly indicate the users that the operation to be executed per request needs to obtain and use their personal information. Therefore, the users may voluntarily select, in accordance with the prompt information, whether to provide their personal information to electronic devices, applications, servers or storage media among other software or hardware executing operations included in the technical solutions of the present disclosure.

Embodiments of the present disclosure will be described below in more details with reference to the drawings. Although the drawings illustrate some embodiments of the present disclosure, it should be appreciated that the present disclosure can be implemented in various manners and should not be limited to the embodiments explained herein. On the contrary, the embodiments are provided for a more thorough and complete understanding of the present disclosure. It is to be understood that the drawings and the embodiments of the present disclosure are provided merely for the exemplary purpose, rather than restricting the protection scope of the present disclosure.

In the description of the embodiments of the present disclosure, the term "includes" and its variants are to be read as open-ended terms that mean "includes, but is not limited to." The term "based on" is to be read as "based at least in part on." The term "one embodiment" or "this embodiment" is to be read as "at least one example embodiment." The terms "first", "second" and so on can refer to same or different objects. The following text also may include other explicit and implicit definitions.

There are still many problems to be addressed during image generation. For example, when users intend to further draw a graph of a scenario in which an object is applied in accordance with existing information (such as appearance information and descriptive text information of the existing object), it is usually required to provide such information to experienced professionals to manually process the information. However, this approach consumes massive time and resources and is relatively low efficient.

With emergence of large language models, users may input a preset fixed text as a prompt text into a large language model, such as text-to-graph model, to generate a corresponding image. In the above solution, when an image is generated using the text-to-graph model, usually only the prompt text is input to the text-to-graph model to generate an image. Users could not customize the required image type, nor could they add particular or customized information to the image, to generate an image suitable for the target object. Since the above traditional scheme only inputs the prompt text to the text-to-graph model, the generated image may significantly differ from the image actually desired by the users, e.g., color difference and material difference etc. Accordingly, the effects of generated images are less satisfactory. Further, in case that the users have the need for image processing, the large language model, if used alone, is only capable of processing text information, but the image information could not be processed. As a result, the users face greater problems when creating text-to-graph works, which affects the accuracy of the generated image.

To at least solve the above and other potential problems, embodiments of the present disclosure provide a method for generating an image. In this method, target object information for a target object may be obtained at the computing device, wherein the target object information includes an original descriptive text for the target object and an original image of the target object. Then, the computing device processes the original descriptive text and the original image to determine an appearance descriptive text for the target object. Next, the computing device also processes the original descriptive text and the original image to generate a scenario descriptive text of a scenario where the target object is applied. In the end, the computing device generates a scenario image of the scenario wherein the target object is applied based on the generated scenario descriptive text. By using the text description and the image information related to the target object, the method can generate more accurate appearance description and application scenarios of the object. The generated image is accordingly more accurate. In addition, the method improves the efficiency of image generation and enhances the user experience.

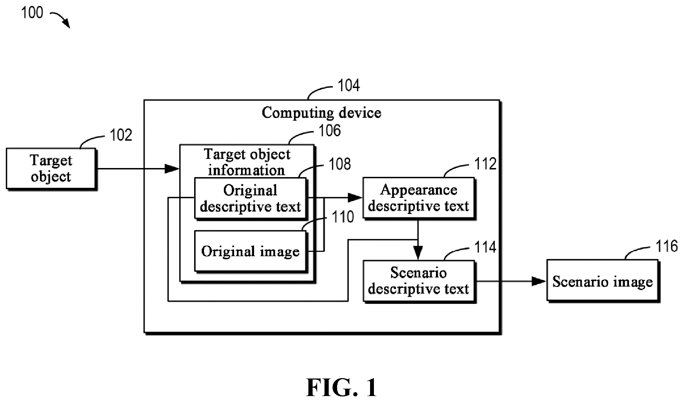

Embodiments of the present disclosure are further described in details below with reference to the drawings, wherein FIG. 1 illustrates an example environment in which the device and/or method according to the embodiments of the present disclosure can be implemented. In the environment 100, the computing device 104 first obtains target object information 106 for a target object 102, and the target object information 106 may include an original descriptive text 108 for describing the target object 102 and an original image 110 corresponding to the target object 102. Then, the computing device 104 determines an appearance descriptive text 112 of the target object 102 with the original descriptive text 108 and the original image 110. Subsequent to determining the appearance descriptive text 112, the computing device 104 further combines the original descriptive text 108 to generate a scenario descriptive text 114 of a scenario where the target object 102 is applied. Finally, the computing device 104 generates a scenario image 116 of the scenario where the target object 102 is applied in accordance with the generated scenario descriptive text 114.

Examples of the computing device 104 include, but not limited to, personal computer, server computer, handheld or laptop device, mobile device (e.g., mobile phone, Personal Digital Assistant (PDA), media player and the like), multi-processor system, consumer electronics, minicomputer, mainframe computer, distributed computing environment including any of the above systems or devices and the like.

As shown in FIG. 1, the computing device 104 may obtain the target object information 106 for the target object 102. In one example, the target object 102 may be an item, such as clothes, shoes and watch etc. In another example, the target object 102 may be a living individual, e.g., pet dogs and birds etc. The target object 102 may be an item or a living individual. The target object 102 also may be a plurality of items and/or a plurality of living individuals. In some embodiments, the target object information 106 is stored in a database. Additionally, every object has matching object information in the database. In case that the database lacks the object information matching with the target object information 106, the information of the target object information 106 may be added into the database. In some embodiments, the computing device 104 may obtain the target object information via networks or other computing devices.

Besides, the target object information 106 includes the original descriptive text 108 for the target object 102 and the original image 110 corresponding to the target object 102. In some embodiments, the original descriptive text 108 may include name of the target object and category to which the target object belongs among other information. For instance, the original descriptive text of a shirt may include shirt name and the category to which the shirt belongs (i.e., tops). Moreover, the original image 110 may be an image obtained from photographing the target object with a camera.

The computing device 104 then further determines the appearance descriptive text 112 of the target object 102 using the original descriptive text 108 and the original image 110. In some embodiments, the appearance descriptive text 112 is obtained with a multimodal machine learning model, and the multimodal machine learning model may be a multimodal large language model for processing texts and images among other multimodal information. It may be understood that the example is provided merely for describing the present disclosure, rather than specifically restricting it.

After determining the appearance descriptive text 112, the computing device 104 may further combine the original descriptive text 108 to generate the scenario descriptive text 114 of the scenario where the target object 102 is applied. In some embodiments, the computing device may process the appearance descriptive text 112 and the original descriptive text 108 with the machine leaning model to generate the scenario descriptive text 114, and the machine learning model is a large language model. Additionally, the computing device 104 also may further generate a scenario descriptive text 114 of a scenario where the target object 102 is more suitably applied in accordance with the category to which the target object 102 belongs.

The computing device 104 finally determines the scenario image 116 of the scenario where the target object 102 is applied in accordance with the determined scenario descriptive text 114. For example, the computing device 104 may first convert the obtained scenario descriptive text to a format identifiable by a machine learning model capable of generating an image, and then provides the converted scenario descriptive text to the machine learning model to generate a corresponding scenario image. In some embodiments, the computing device 104 also may obtain an image part corresponding to the target object from the original image of the target object 102. Subsequently, the computing device combines the scenario image with the image part of the target object 102 to form a combined image. Additionally, the image part of the target object 102 is obtained from segmenting the original image by the computing device 104.

In some embodiments, the scenario image 116 of the scenario where the target object 102 is applied includes the target object. For example, a scenario image for a bicycle may be an image showing that the bicycle is parked in a park. In some embodiments, the scenario image 116 of the scenario where the target object 102 is applied may not include the target object and instead demonstrates a scenario in which the target object is utilized. For example, for a brush used when bathing a pet dog, the generated scenario image 116 may be a pet dog bathing. This scenario is where the hairbrush is used. It is to be understood that the above example is provided only for describing the present disclosure, rather than restricting it.

Additionally, the computing device 104 also may use the original descriptive text for the target object 102 to generate supplementary information for the target object, such as information for describing prominent features of the target object 102. In one example, the supplementary information may be the information that significantly distinguishes the target object from other objects or the special information for a particular user. The above example is provided only for describing the present disclosure, rather than restricting it. In some embodiments, the computing device 104 also may generate the appearance descriptive text 112 in further combination with the supplementary information.

By using the text description and the image information related to the target object, the method may generate more accurate appearance description and application scenarios of the object. The generated image is accordingly more accurate. In addition, the method improves the efficiency of image generation and enhances the user experience.

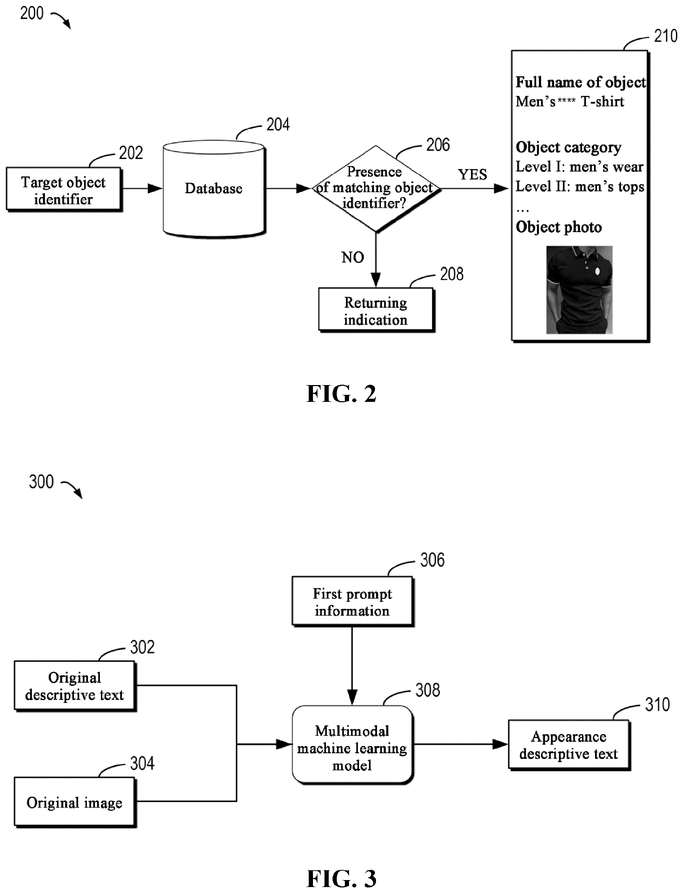

The schematic diagram of the example environment in which the device and/or method according to the embodiments of the present disclosure can be implemented has been depicted above with reference to FIG. 1. A schematic diagram of a flowchart for obtaining the object information of the target object according to embodiments of the present disclosure is to be described below with reference to FIG. 2.

As shown in FIG. 2, in the example 200, a database 204 includes object information of a plurality of objects. The object information of each object may include corresponding descriptive text and corresponding original image. The object information of each object may be searched with an object identifier in the database.

While obtaining the target object information 210 of the target object 102, the computing device 104 is required to first obtain a target object identifier 202 corresponding to the target object 102. Afterwards, the computing device 104 searches the target object information of the target object in the database 204. At this point, the computing device 104 queries in the database 204 to determine whether a matching object identifier is present at block 206.

When it is determined that there is an object identifier matching with the target object identifier 202 of the target object 102 in the database 204 after the query, the computing device 104 directly obtains the target object information 210 of the target object 102. For example, the computing device 104 may obtain the original descriptive text 108 and the original image 110 in the target object information 210.

In some embodiments, when it is determined that there is no object identifier matching with the target object identifier 202 of the target object 102 in the database 204 after the query, the computing device 104 issues to the user a return indication 208 that the target object information 210 of the target object is not obtained.

In some embodiments, the database 204 may be updated according to the needs. For example, object identifiers that are no longer required in the database may be screened. In one example, the object identifiers which are added at earlier time may be screened out in accordance with the addition time of the object identifier and information related to these earlier object identifiers are deleted in the database 204, to save the storage space of the database 204. In another example, the screening may also be performed based on classification of the object identifier. Object identifiers of a specific classification are screened out and all object identifiers of a certain unnecessary classification may subsequently be deleted in batch.

In some embodiments, the database 204 also may be automatically updated. For example, the database 204 detects inconsistency with the object identifier information stored in the server according to a preset rule (e.g., the database 204 self-checking at regular intervals) and deletes the inconsistent object identifier information.

Through this method, as the object information of the target object is stored in the database, the computer device can more conveniently and freely access the object information from the database. Accordingly, the computing device can more efficiently obtain the object information of the target object and the user experience is enhanced.

The schematic diagram of a flowchart for obtaining the object information of the target object according to some embodiments of the present disclosure has been depicted above with reference to FIG. 2. Next, a schematic diagram of an example of the appearance descriptive text for generating an image according to embodiments of the present disclosure is to be described below with reference to FIG. 3. The example shown by FIG. 3 can be executed by the computing device 104 illustrated in FIG. 1 or any other suitable computing devices.

In the example 300 shown by FIG. 3, the computing device 104 determines the appearance descriptive text 310 for the target object 102 with the original descriptive text 302 and the original image 304.

The computing device 104 also may obtain first prompt information 306, and the first prompt information includes a first instruction for indicating the computing device 104 to obtain appearance-related information of the target object 102. For example, in case that the target object is clothes, the first instruction included in the first prompt information requires the computing device to obtain information of the target object, such as color, size and style etc. In the end, the computing device 104 applies the first prompt information, the original descriptive text and the original image to a multimodal machine learning model 308, to determine the appearance descriptive text 310. Additionally, the multimodal machine learning model is a multimodal large language model for processing texts and images among other information. It is to be understood that the above example is provided only for describing the present disclosure, rather than restricting it.

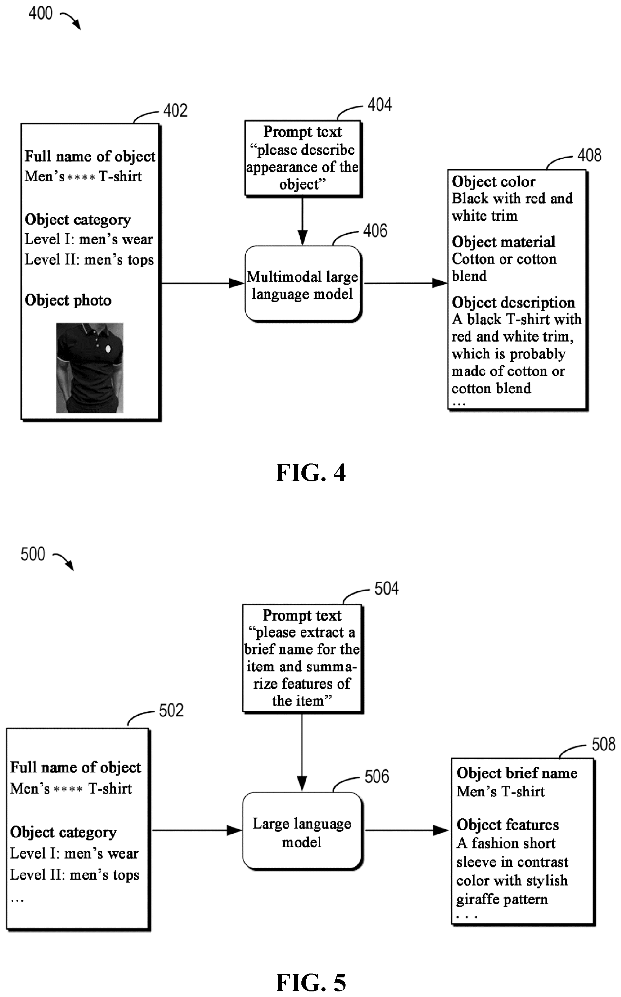

Next, a schematic diagram of another example of the appearance descriptive text for generating an image in accordance with some embodiments of the present disclosure is to be described below with reference to FIG. 4. In the example 400, the computing device first obtains the target object information 102, including full name, class and photo for an item of the target object.

In some embodiments, while applying the target object information 402 to the multimodal large language model 406, the computing device will also apply the prompt text 404 to the multimodal large language model. The content of the prompt text is "please describe the appearance of the item". The computing device then outputs the appearance descriptive text 408 for the item, including description with respect to the color and the overall appearance of the item.

The schematic diagram of the appearance descriptive text for generating an image in accordance with the embodiments of the present disclosure has been depicted above with reference to FIG. 4. Next, a schematic diagram of the additional information for generating an image in accordance with some embodiments of the present disclosure is to be described below with reference to FIG. 5.

In the example 500, the computing device first applies the target object information 502 obtained in the example 500 to the large language model 506 and then also applies the prompt text 504 to the large language model 506. After applying the above information to the large language model, the computing device can obtain the additional information 508 for the target object, e.g., descriptive text for features of the target object.

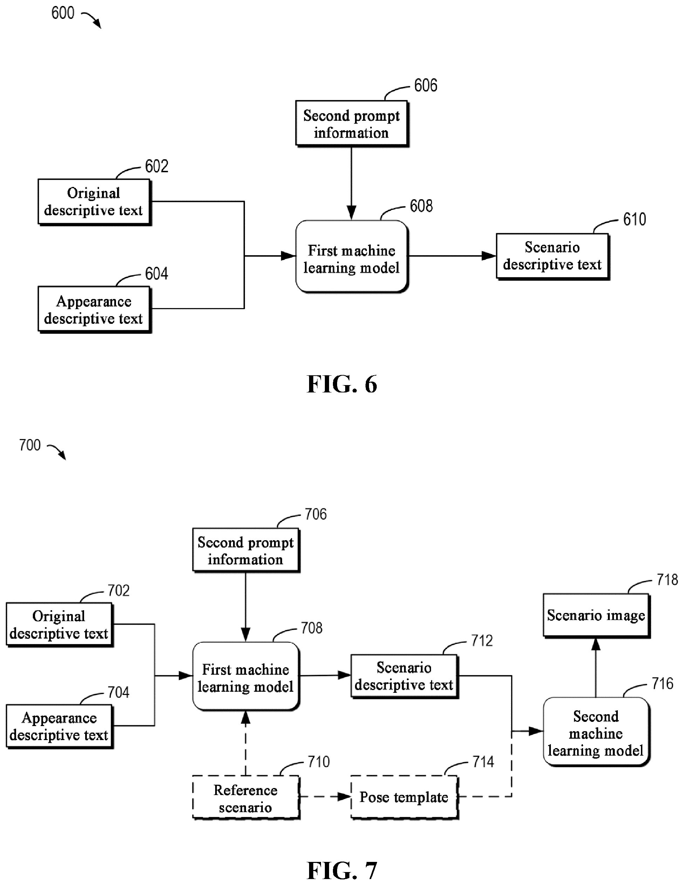

Next, a schematic diagram of an example of the scenario descriptive text for generating the image in accordance with some embodiments of the present disclosure is to be described below with reference to FIG. 6. In the example 600 shown by FIG. 6, the computing device 104 generates the scenario descriptive text 610 of the scenario where the target object 102 is applied based on the original descriptive text 602 and the appearance descriptive text 604.

The computing device 104 will obtain second prompt information 606, and the second prompt information 606 includes a second instruction for indicating the computing device 104 to obtain the scenario where the target object 102 is applied. For example, in case that the target object 102 is a business shirt, the business shirt may be applied to a café scenario, and the second instruction included in the second prompt information 606 requires the computing device to obtain the café scenario. In the end, in combination with the original descriptive text and the appearance descriptive text, the computing device 104 applies the second prompt information 606, the original descriptive text 602 and the appearance descriptive text 604 to the first machine learning model 608, to generate the scenario descriptive text. Additionally, the first machine learning model 608 is a large language model, which is utilized to process text-related information. It is to be understood that the above example is provided only for describing the present disclosure, rather than restricting it.

In some embodiments, the computing device 104 also obtains the supplementary information of the target object 102, where the supplementary information includes features of the target object 102. For example, in case that the target object is a frying pan, the supplementary information includes special materials for manufacturing the frying pan, the structure of the frying pan and non-stick property of the frying pan. In the end, the computing device 104 may generate the scenario descriptive text with the original descriptive text, the appearance descriptive text and the supplementary information.

Through this method, during the generation of the scenario descriptive text, the features of the target object may also be generated as texts and further displayed on the generated image in texts or other forms. Therefore, the generated images are customized and the user experience is enhanced.

The schematic diagram of an example of the scenario descriptive text for generating an image according to some embodiments of the present disclosure has been depicted above with reference to FIG. 6. Next, a schematic diagram of an example procedure for generating an image according to some embodiments of the present disclosure is to be described below with reference to FIG. 7. The example procedure can be executed by the computing device 104 illustrated in FIG. 1 or any other suitable computing devices.

In the example 700 shown by FIG. 7, the computing device 104 generates, based on the scenario descriptive text 712, the scenario image 718 of the scenario where the target object 102 is applied. As illustrated by the example 700, it is first required to apply the second prompt information 706, the original descriptive text 702 and the appearance descriptive text 704 to the first machine learning model 708 to generate the scenario descriptive text 712. Further, the scenario descriptive text 712 is applied to the second machine learning model 716 to generate the scenario image 718, wherein the second machine learning model 716 is a text-to-graph model.

Alternatively, in some embodiments, the computing device 104 may first determine whether the target object belongs to a target category. If the target object does not belong to the target category, the scenario image is generated in the aforementioned way. If the target object belongs to the target category, it is required to obtain a reference scenario corresponding to the target category. Afterwards, during the generation of the scenario descriptive text 712, it is also required to further combine with the reference scenario 710 to generate the scenario descriptive text 712 corresponding to the reference scenario. At this point, while the scenario image is generated by the second machine learning model, it is also required to obtain a pose template 714 associated with the reference scenario 710, and pose template 714 is a pre-designed template stored in the computing device 104 and is associated with the target category. It is to be appreciated that every different target category has a corresponding pose template, and a plurality of target categories and a plurality of pose templates corresponding thereto are stored in the computing device 104 or a remote server. In the end, the computing device 104 applies the scenario descriptive text 712 and the pose template 714 to the second machine learning model to generate the scenario image.

Additionally, after the scenario descriptive text 712 is obtained, it is also required to use the large language model in combination with the prompt information to generate a text that conforms to the processing format of the second machine learning model. Then, the computing device 104 provides the formatted text to the second machine leaning model for processing.

According to this method, in case of generating the scenario image, the preset target category and the corresponding pose template may be applied to the procedure of image generation, to save the time for generating an image. Therefore, a large amount of images can be generated in a brief period, the efficiency for generating an image is improved and the user experience is enhanced.

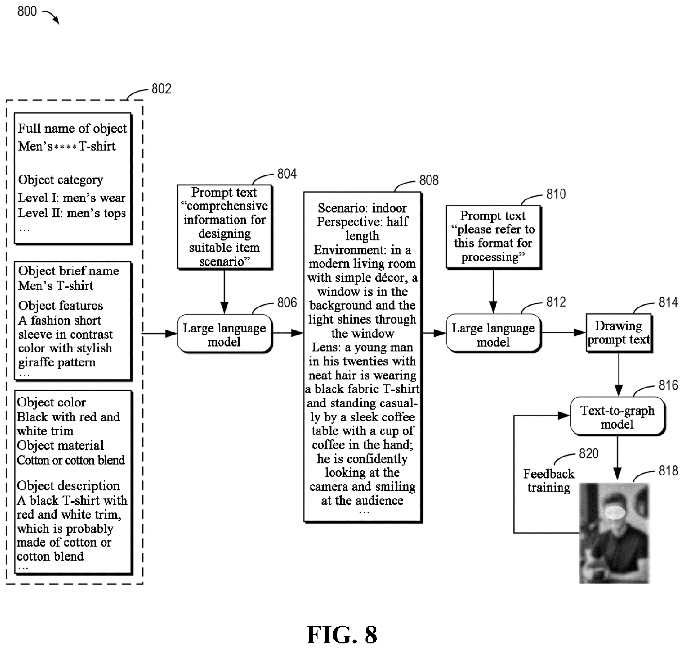

The schematic diagram of an example procedure for generating an image according to some embodiments of the present disclosure has been depicted above with reference to FIG. 7. Next, a schematic diagram of another example procedure for generating an image according to some embodiments of the present disclosure is to be described below with reference to FIG. 8.

In the example 800, the computing device 104 first applies the original descriptive text, the appearance descriptive text and the additional information previously obtained in the example to the large language model 806 and also simultaneously applies the prompt text 804 to the large language model 806. The content of the prompt text is "comprehensive information for designing suitable item scenario".

Subsequently, the large language model outputs the scenario descriptive text for the scenario where the item is applied at block 808. The computing device applies the scenario descriptive text and the prompt text 810 to the large language model 812. The content of the prompt text is "please refer to this format for processing". The large language model 812 begins the processing and then outputs a drawing prompt text 814. The computing device 804 further provides the drawing prompt text to the text-to-graph model 816 to generate the image 818 in the end.

In some embodiments, after generating the image 818, the computing device returns the image 818 with good feedback to the text-to-graph model for feedback training 820, to further train the text-to-graph model. Thus, the accuracy of the image generated from the text-to-graph model is improved and the processing efficiency of the text-to-graph model is also enhanced. Additionally, to avoid generating wrong images, a model evaluation link is introduced to reprocess the images with poor aesthetics and errors.

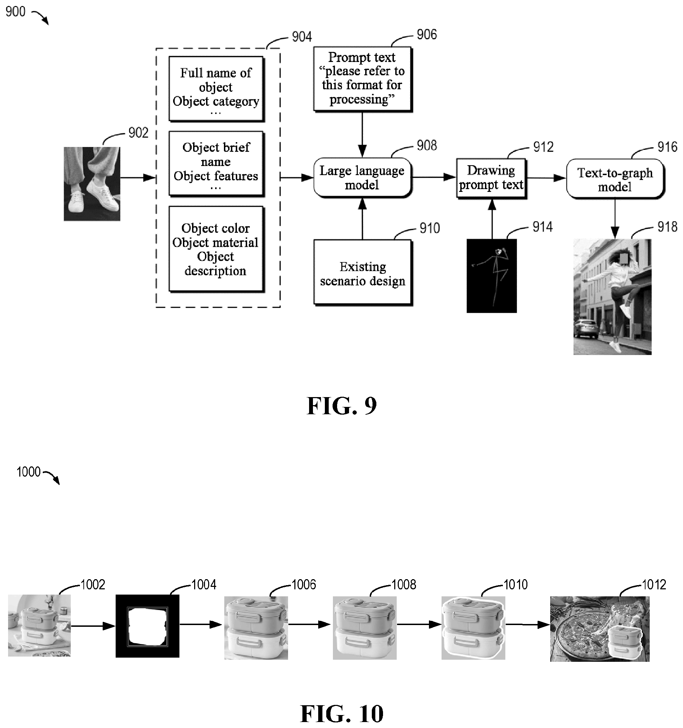

The schematic diagram of an example procedure for generating an image according to some embodiments of the present disclosure has been depicted above with reference to FIG. 8. Next, a schematic diagram of a further example procedure for generating an image according to some embodiments of the present disclosure is to be described below with reference to FIG. 9.

In the example 900, the computing device first obtains the target object information of the target object corresponding to the target category, such as a pair of white women's shoes 902. Then, the computing device obtains the original descriptive text, the appearance descriptive text and the additional information of the object information, such as the original descriptive text, the appearance descriptive text and the additional information for a pair of white women's shoes at block 904.

In addition to the various information in the block 904, the computing device also applies the prompt text 906 and the existing scenario design 910 to the large language model 908. The content of the prompt text is "please refer to this format for processing", and the existing scenario design 910 is a design for items of the particular target category. It is to be understood that items of different target categories have corresponding existing scenario designs.

Next, the computing device further obtains a drawing prompt text 912 in accordance with a result output by the large language model 908 and further applies to the text-to-graph model 916 to generate an image 918. At this point, the computing device also obtains the existing pose template 914 and applies the existing pose template 914 and the drawing prompt text 912 to the text-to-graph model 916. The pose template is also designed specifically for items of the target category, and different items of the target category each contain a plurality of distinct pose templates. The computing device may select a suitable pose template according to the needs to combine with the drawing prompt text.

The schematic diagram of a further example procedure for generating an image according to some embodiments of the present disclosure has been depicted above with reference to FIG. 9. Next, a schematic diagram of an example for segmenting and combining images during image generation according to some embodiments of the present disclosure is to be described below with reference to FIG. 10.

In the example 1000, after generating the scenario image, the computing device also may combine the generated scenario image with the original image part of the target object to ensure correctness of image.

For example, other information in the original image 1002 is not required when the image part of the target image is combined with the scenario image. As such, at block 1004, the computing device identifies a lunch box with an image identification model and marks an outline of the identified lunch box.

At block 1006, the computing device locates a body of the lunch box to ensure that the body of the lunch box identified by the computing device is correct and within the identification range. Next, an image segmentation is performed on the body of the lunch box in the image 1008. The body of the lunch box is segmented from the original scenario to obtain an image containing the body of the lunch box alone.

After image segmentation, edges of the body image of the lunch box are uneven and rough. At this moment, edges of the body image of the lunch box are subject to an atomic beautification operation, i.e., the edges of the body image of the lunch box are outlined to become smooth. Finally, the computing device splices the body image of the lunch box with the generated scenario image to generate a final image 1012.

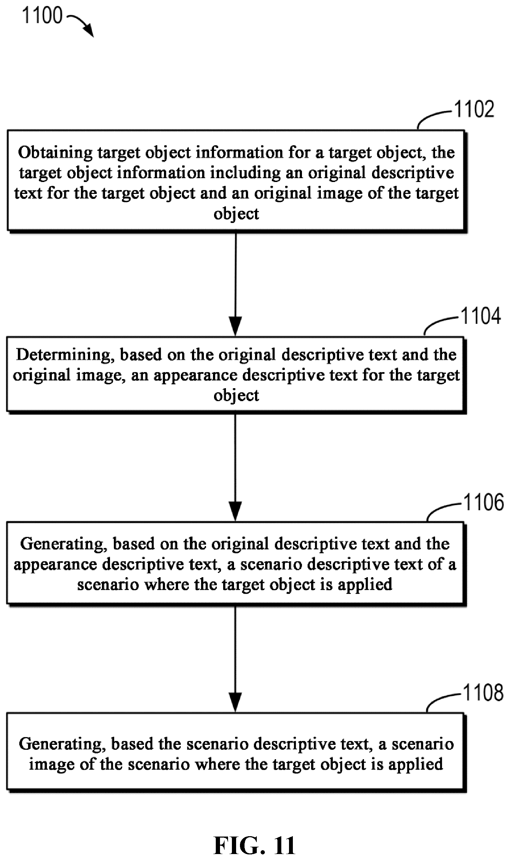

Next, a schematic diagram of an example method 1100 for generating an image according to embodiments of the present disclosure is to be described below with reference to FIG. 11. The method may be applied to the example environment in FIG. 1 or any other suitable environments, and may be executed by the computing device 104 or any other suitable computing devices.

In the example method 1100 shown by FIG. 11, the computing device 104 obtains, at block 1102, the target object information 106 for the target object 102. The target object information 106 includes the original descriptive text 108 for the target object 102 and the original image 110 of the target object 102.

In some embodiments, the target object information is obtained through retrieving the database. The database may store object information of various objects. The object information of each object at least includes a text description describing the object and a corresponding original image. For example, the database stores descriptive information of items (such as clothes, tables, chairs, shoes and hairbrushes etc.) and their images. The descriptive information may be name of the item, the category to which the item belongs, and size and model of the item among other text information. The original image may be a front photo or a side photo of the item captured by a camera. Accordingly, the computing device 104 may search the corresponding target object information from the database via the object identifier. Each object has the matching object information in the database. Additionally, if the database lacks the object information matching with the object, this object information may be added into the database.

In some embodiments, the computing device 104 may obtain the target object information corresponding to the target object through the network. For example, the corresponding target object information is looked up through accessing particular portal websites via the network. In some embodiments, the computing device 104 also may obtain the target object information corresponding to the target object from other computing devices connected with the computing device 104.

Next, at block 1104, the computing device 104 determines the appearance descriptive text 112 for the target object 102 based on the original descriptive text 108 and the original image 110. In order to more accurately generate the scenario graph for the target object, it is required to describe the appearance of the target object more accurately. Accordingly, the computing device 104 generates the appearance descriptive text 112 by further utilizing the original descriptive text 108 and the original image 110 to describe the target object in a better way.

In some embodiments, the appearance descriptive text 112 is obtained with the multimodal machine learning model. For example, the multimodal machine learning model may be a multimodal large language model for processing texts and images among other multimodal information. At this moment, the computing device 104 inputs the original descriptive text 108 and the original image 110 into the multimodal machine learning model to obtain the corresponding appearance descriptive text 112.

Additionally, the computing device 104 also obtains first prompt information, and first prompt information includes a first instruction for indicating the computing device 104 to obtain appearance information of the target object 102. For example, in case that the target object is a shirt, the first instruction contained in the first prompt information requires the computing device to obtain the appearance information of the target object. In the end, the computing device 104 applies the first prompt information, the original descriptive text and the original image to a multimodal machine learning model, to determine the appearance descriptive text. It is to be understood that the above example is provided only for describing the present disclosure, rather than restricting it.

In some embodiments, the appearance descriptive text 112 is implemented by a mapping relation, and the mapping relation reflects the mapping between descriptive text, image, and the appearance descriptive text. The computing device 104 determines the appearance descriptive text 112 corresponding to the original descriptive text 108 and the original image 110 by searching the mapping relation. The above example is provided only for describing the present disclosure, rather than restricting it.

At block 1106, the computing device 104 generates the scenario descriptive text 114 of the scenario where the target object 102 is applied based on the original descriptive text 108 and the original image 110. The computing device processes the above two text information obtained to generate the scenario descriptive text 114.

In some embodiments, the computing device 104 uses the first machine learning model to process the original descriptive text 108 and the appearance descriptive text 112. Afterwards, the scenario descriptive text 114 is generated by the first machine learning model. For instance, the machine learning model is a large language model for processing texts. Additionally, the computing device 104 also obtains the second prompt information, and the second prompt information includes a second instruction for indicating the computing device 104 to obtain the scenario where the target object 102 is applied. For example, in case that the target object 102 is a shirt, the shirt may be applied to a café scenario, and the second instruction contained in the second prompt information requires the computing device to obtain the café scenario where the shirt may be applied. In the end, in combination with the original descriptive text and the appearance descriptive text, the computing device 104 applies the second prompt information, the original descriptive text and the appearance descriptive text to the machine learning model, to generate the scenario descriptive text.

In some embodiments, the computing device 104 also obtains the supplementary information for the target object 102, and the supplementary information includes features of the target object 102. For example, in case that the target object is a shirt, the supplementary information includes special materials for manufacturing the shirt. The acquisition is made by inputting the original descriptive text into the language model. In the end, the computing device 104 generates the scenario descriptive text with the original descriptive text, the appearance descriptive text and the supplementary information.

In some embodiments, the computing device 104 determines the category of the target object. If the category of the target object belongs to the target category, the computing device 104 may further generate the scenario descriptive text 114 of the scenario where the target object 102 is more suitably applied in accordance with the category to which the target object 102 belongs. The target category may have an existing reference scenario. For example, the reference scenario is the scenario where the item of the target category is frequently used. Therefore, the target category is strongly correlated with the reference scenario. For example, the target category is shoes and a set of reference scenarios corresponding thereto may be preset. In the end, the computing device 104 applies the second prompt information, the original descriptive text, the appearance descriptive text and the reference scenario to the first machine learning model, to generate the scenario descriptive text. The scenario descriptive text is related to the reference scenarios in the set of reference scenarios. Additionally, the first machine learning model is a large language model utilized for processing text-related information. It is to be understood that the above example is provided only for describing the present disclosure, rather than restricting it.

In some embodiments, the scenario descriptive text 114 is obtained using the predefined mapping relation. For example, the mapping relation among the descriptive text, the appearance descriptive text and the scenario descriptive text is preset. Therefore, the computing device 104 may search the scenario descriptive text corresponding to the original descriptive text 108 and the appearance descriptive text 112 from the mapping relation. The above example is provided only for describing the present disclosure, rather than restricting it.

Finally, at block 1108, the computing device 104 generates the scenario image 116 of the scenario where the target object 102 is applied based on the scenario descriptive text 114. After obtaining the scenario descriptive text 114, the computing device 104 may obtain the scenario image 116 desired by the user by processing the scenario descriptive text 114.

In some embodiments, the computing device 104 applies the scenario descriptive text to the second machine learning model to generate the scenario image. The second machine learning model is a text-to-graph diffusion model. It is to be appreciated that any machine learning models can be selected as the second machine learning model as long as they are capable of generating an image according to the present disclosure. The above example is provided only for describing the present disclosure, rather than restricting it.

Additionally, the computing device 104 applies the scenario descriptive text to the machine learning model, e.g., large language model, to adjust the scenario descriptive text into a predefined format that can be identified by the text-to-graph diffusion model. For example, the scenario descriptive text is executed in the format that can be accurately identified by the text-to-graph diffusion model. For example, the predefined format may be described in English. The object is described first, then the scenario and atmosphere. The above example is provided only for describing the present disclosure, rather than restricting it.

In some embodiments, in case that the target object belongs to the target category and the scenario descriptive text is generated using one reference scenario in a set of reference scenarios corresponding to this target category, the computing device 104 may also obtain a pose template associated with the reference scenario. Each reference scenario has a corresponding pose template. For example, the pose template is an already designed template stored in the computing device 104. It is to be understood that every different target category has a corresponding pose template, and a plurality of target categories and a plurality of pose templates corresponding thereto are stored in the computing device 104 or a remote server. In the end, the computing device 104 applies the scenario descriptive text and the pose template to the second machine learning model to generate the scenario image.

In some embodiments, the scenario image 116 is formed by splicing the image of the scenario with a partial image of the target object 102. In some further embodiments, the partial image of the target object 102 is obtained by the computing device 104 through segmentation. For example, after obtaining the original image 110, the computing device 104 will segment the original image 110. For instance, the original image 110 is segmented to a plurality of image parts using a subject recognition model and an image segmentation model etc. The precision of segmentation is voluntarily set by the users and may be changed at any time depending on the requirements, to enhance the efficiency for image generation.

In some embodiments, part or whole of the target object may be combined with the generated scenario for customized modifications. For example, if the target object is a cat teaser and the scenario shows a kitten lying on the floor of the house and playing, changes of the cat teaser may be blurred or white edged and the processed cat teaser is placed in the scene graph. Further, contrast and saturation of the scene graph may also be processed to generate the effects desired by the users, so as to generate images in a customized way.

By using the text description and the image information related to the target object, the method can generate more accurate appearance description and application scenarios of the object. The generated image is accordingly more accurate. In addition, the method improves the efficiency of image generation and enhances the user experience_{∘}

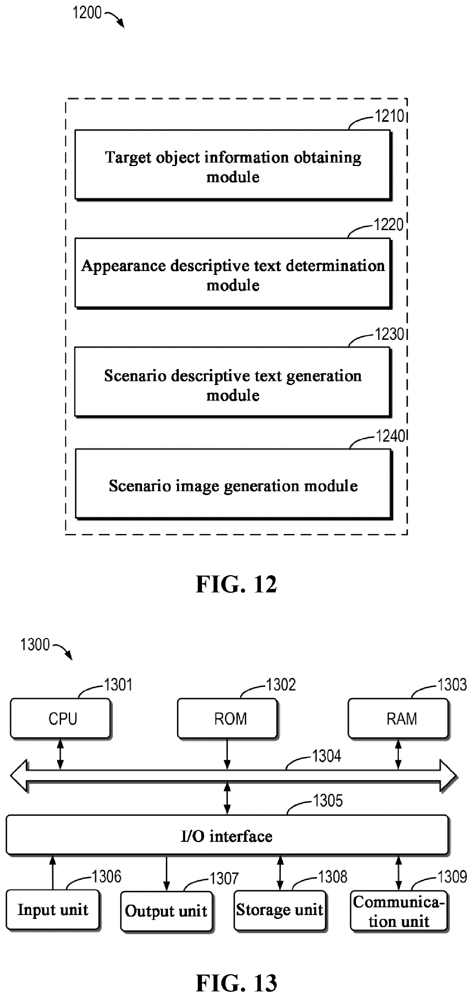

The schematic diagram of an example method for generating an image according to some embodiments of the present disclosure has been depicted above with reference to FIG. 11. Next, a schematic block diagram of an apparatus 1200 for generating an image according to embodiments of the present disclosure is to be described below with reference to FIG. 12.

As shown in FIG. 12, the apparatus 1200 comprises a target object information obtaining module 1210 configured to obtain target object information for a target object, the target object information including an original descriptive text for the target object and an original image of the target object; an appearance descriptive text determination module 1220 configured to determine, based on the original descriptive text and the original image, an appearance descriptive text for the target object; a scenario descriptive text generation module 1230 configured to generate, based on the original descriptive text and the appearance descriptive text, a scenario descriptive text of a scenario where the target object is applied; and a scenario image generation module 1240 configured to generate, based the scenario descriptive text, a scenario image of the scenario where the target object is applied.

In some embodiments, the target object information obtaining module 1210 also includes: a target object identifier obtaining module configured to obtain a target object identifier corresponding to the target object; a target object identifier matching module configured to determine whether an object identifier matching with the target object identifier is present in a database for storing object information; and the target object information obtaining module is configured to, in response to presence of the object identifier matching with the target object identifier in the database, obtain the target object information for the target object.

In some embodiments, the target object information obtaining module also includes: an indication returning module configured to, in response to absence of the object identifier matching with the target object identifier in the database, return an indication that the target object information is not obtained.

In some embodiments, the appearance descriptive text determination module 1220 includes: a first prompt information obtaining module configured to obtain first prompt information, and the first prompt information indicates obtaining appearance of the target object; and the appearance descriptive text determination module is configured to determine the appearance descriptive text for the target object by applying the original descriptive text, the original image and the first prompt information to a multimodal machine learning model.

In some embodiments, the scenario descriptive text generation module 1230 includes: a second prompt information obtaining module configured to obtain second prompt information, and the second prompt information indicates obtaining a scenario where the target object is applied; and a scenario descriptive text determination module is configured to generate the scenario descriptive text by applying the second prompt information, the original descriptive text and the appearance descriptive text to a first machine learning model.

In some embodiments, the scenario descriptive text determination module also includes: a target category determination module configured to determine whether the target object belongs to a target category; and the scenario descriptive text determination module is configured to, in response to the target object not belonging to the target category, generate the scenario descriptive text by applying the second prompt information, the original descriptive text and the appearance descriptive text to the first machine learning model.

In some embodiments, the scenario descriptive text determination module also includes: a reference scenario obtaining module configured to, in response to the target object belonging to the target category, obtain a set of reference scenarios corresponding to the target category; and the scenario descriptive text generation module is configured to generate the scenario descriptive text by applying the second prompt information, the original descriptive text, the appearance descriptive text and the set of reference scenarios to the first machine learning model, and the scenario descriptive text is associated with reference scenarios in the set of reference scenarios.

In some embodiments, the scenario image generation module 1240 includes: a pose template obtaining module configured to obtain a pose template associated with the reference scenario; and a first scenario image generation module configured to generate the scenario image based on the pose template and the scenario descriptive text.

In some embodiments, the first scenario image generation module also includes: a second scenario image generation module configured to generate the scenario image by applying the pose template and the scenario descriptive text to a second machine learning model.

In some embodiments, the apparatus 1200 also comprises: a supplementary information obtaining module configured to obtain supplementary information for the target object based on the original descriptive text; and wherein generating a scenario descriptive text of a scenario where the target object is applied includes: the scenario descriptive text generation module configured to generate the scenario descriptive text of the scenario where the target object is applied based on the original descriptive text, the appearance descriptive text and the supplementary information.

In some embodiments, the apparatus 1200 also comprises: an image part obtaining module configured to obtain from the original image an image part corresponding to the target object; and a combined image generation module configured to generate a combined image by splicing the scenario image with the image part for the target object.

In some embodiments, the image part obtaining module also includes: a target object identification module configured to identify the target object from the original image; and the image part obtaining module is configured to obtain the image part corresponding to the target object by segmenting the original image.

FIG. 13 illustrates a schematic block diagram of an example device 1300 for implementing embodiments of the present disclosure. The computing device 104 in FIG. 1 may be implemented by the device. As shown in FIG. 13, the device 1300 comprises a central process unit (CPU) 1301, which can execute various suitable actions and processing based on the computer program instructions stored in the read-only memory (ROM) 1302 or computer program instructions loaded in the random-access memory (RAM) 1303 from the storage unit 1308. The RAM 1303 can also store all kinds of programs and data required by the operation of the device 1300. CPU 1301, ROM 1302 and RAM 1303 are connected to each other via a bus 1304. The input/output (I/O) interface 1305 is also connected to the bus 1304.

A plurality of components in the device 1300 is connected to the I/O interface 1305, including: an input unit 1306, such as keyboard, mouse and the like; an output unit 1307, e.g., various kinds of display and loudspeakers etc.; a storage unit 1308, such as disk and optical disk etc.; and a communication unit 1309, such as network card, modem, wireless transceiver and the like. The communication unit 1309 allows the device 1300 to exchange information/data with other devices via the computer network, such as Internet, and/or various telecommunication networks.

The above described procedure and processing, such as examples 200, 300, 400, 500, 600, 700, 800, 900 and 1000 and method 1100, can be executed by the processing unit 1301. For example, in some embodiments, examples 200, 300, 400, 500, 600, 700, 800, 900 and 1000 and method 1100 can be implemented as a computer software program tangibly included in the machine-readable medium, e.g., storage unit 1308. In some embodiments, the computer program can be partially or fully loaded and/or mounted to the apparatus 1300 via ROM 1302 and/or communication unit 1309. When the computer program is loaded to RAM 1303 and executed by the CPU 1301, one or more actions of the above described examples 200, 300, 400, 500, 600, 700, 800, 900 and 1000 and method 1100 can be implemented.

The present disclosure can be method, apparatus, system and/or computer program product. The computer program product can include a computer-readable storage medium, on which the computer-readable program instructions for executing various aspects of the present disclosure are loaded.

The computer-readable storage medium can be a tangible apparatus that maintains and stores instructions utilized by the instruction executing apparatuses. The computer-readable storage medium can be, but not limited to, such as electrical storage device, magnetic storage device, optical storage device, electromagnetic storage device, semiconductor storage device or any appropriate combinations of the above. More concrete examples of the computer-readable storage medium (non-exhaustive list) include: portable computer disk, hard disk, random-access memory (RAM), read-only memory (ROM), erasable programmable read-only memory (EPROM or flash), static random-access memory (SRAM), portable compact disk read-only memory (CD-ROM), digital versatile disk (DVD), memory stick, floppy disk, mechanical coding devices, punched card stored with instructions thereon, or a projection in a slot, and any appropriate combinations of the above. The computer-readable storage medium utilized here is not interpreted as transient signals per se, such as radio waves or freely propagated electromagnetic waves, electromagnetic waves propagated via waveguide or other transmission media (such as optical pulses via fiber-optic cables), or electric signals propagated via electric wires.

The described computer-readable program instruction can be downloaded from the computer-readable storage medium to each computing/processing device, or to an external computer or external storage via Internet, local area network, wide area network and/or wireless network. The network can comprise copper-transmitted cable, optical fiber transmission, wireless transmission, router, firewall, switch, network gate computer and/or edge server. The network adapter card or network interface in each computing/processing device receives computer-readable program instructions from the network and forwards the computer-readable program instructions for storage in the computer-readable storage medium of each computing/processing device.

The computer program instructions for executing operations of the present disclosure can be assembly instructions, instructions of instruction set architecture (ISA), machine instructions, machine-related instructions, microcodes, firmware instructions, state setting data, or source codes or target codes written in any combinations of one or more programming languages, wherein the programming languages comprise object-oriented programming languages, e.g., Smalltalk, C++ and so on, and traditional procedural programming languages, such as "C" language or similar programming languages. The computer-readable program instructions can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider). In some embodiments, state information of the computer-readable program instructions is used to customize an electronic circuit, e.g., programmable logic circuit, field programmable gate array (FPGA) or programmable logic array (PLA). The electronic circuit can execute computer-readable program instructions to implement various aspects of the present disclosure.

Various aspects of the present disclosure are described here with reference to flow chart and/or block diagram of method, apparatus (system) and computer program products according to embodiments of the present disclosure. It should be understood that each block of the flow chart and/or block diagram and the combination of various blocks in the flow chart and/or block diagram can be implemented by computer-readable program instructions.

The computer-readable program instructions can be provided to the processing unit of general-purpose computer, dedicated computer or other programmable data processing apparatuses to manufacture a machine, such that the instructions that, when executed by the processing unit of the computer or other programmable data processing apparatuses, generate an apparatus for implementing functions/actions stipulated in one or more blocks in the flow chart and/or block diagram. The computer-readable program instructions can also be stored in the computer-readable storage medium and cause the computer, programmable data processing apparatus and/or other devices to work in a particular manner, such that the computer-readable medium stored with instructions comprises an article of manufacture, including instructions for implementing various aspects of the functions/actions stipulated in one or more blocks of the flow chart and/or block diagram.

The computer-readable program instructions can also be loaded into computer, other programmable data processing apparatuses or other devices, so as to execute a series of operation steps on the computer, other programmable data processing apparatuses or other devices to generate a computer-implemented procedure. Therefore, the instructions executed on the computer, other programmable data processing apparatuses or other devices implement functions/actions stipulated in one or more blocks of the flow chart and/or block diagram.

The flow chart and block diagram in the drawings illustrate system architecture, functions and operations that may be implemented by system, method and computer program product according to multiple implementations of the present disclosure. In this regard, each block in the flow chart or block diagram can represent a module, a part of program segment or code, wherein the module and the part of program segment or code include one or more executable instructions for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Various embodiments of the present disclosure have been described above and the above description is only exemplary rather than exhaustive and is not limited to the embodiments of the present disclosure. Many modifications and alterations, without deviating from the scope and spirit of the explained various embodiments, are obvious for those skilled in the art. The selection of terms in the text aims to best explain principles and actual applications of each embodiment and technical improvements made in the market by each embodiment, or enable those ordinary skilled in the art to understand embodiments of the present disclosure.

## Claims

1. A method for generating an image, comprising:
obtaining target object information for a target object, the target object information comprising an original descriptive text for the target object and an original image of the target object;
determining, based on the original descriptive text and the original image, an appearance descriptive text for the target object;
generating, based on the original descriptive text and the appearance descriptive text, a scenario descriptive text of a scenario where the target object is applied; and
generating, based the scenario descriptive text, a scenario image of the scenario where the target object is applied.

2. The method of claim 1, wherein obtaining target object information for a target object comprises:
obtaining a target object identifier corresponding to the target object;
determining whether an object identifier matching with the target object identifier is present in a database for storing object information; and
in response to presence of the object identifier matching with the target object identifier in the database, obtaining the target object information for the target object.

3. The method of claim 2, wherein obtaining target object information for a target object further comprises:
in response to absence of the object identifier matching with the target object identifier in the database, returning an indication that the target object information is not obtained.

4. The method of claim 1, wherein determining an appearance descriptive text for the target object comprises:
obtaining first prompt information, wherein the first prompt information indicates obtaining an appearance of the target object; and
determining the appearance descriptive text for the target object by applying the original descriptive text, the original image and the first prompt information to a multimodal machine learning model.

5. The method of claim 1, wherein generating a scenario descriptive text of a scenario where the target object is applied comprises:
obtaining second prompt information, wherein the second prompt information indicates obtaining a scenario where the target object is applied; and
generating the scenario descriptive text by applying the second prompt information, the original descriptive text and the appearance descriptive text to a first machine learning model.

6. The method of claim 5, wherein generating the scenario descriptive text by applying the second prompt information, the original descriptive text and the appearance descriptive text to a first machine learning model comprises:
determining whether the target object belongs to a target category; and
in response to the target object not belonging to the target category, generating the scenario descriptive text by applying the second prompt information, the original descriptive text and the appearance descriptive text to the first machine learning model.

7. The method of claim 6, wherein generating the scenario descriptive text by applying the second prompt information, the original descriptive text and the appearance descriptive text to a first machine learning model further comprises:
in response to the target object belonging to the target category, obtaining a set of reference scenarios corresponding to the target category; and
generating the scenario descriptive text by applying the second prompt information, the original descriptive text, the appearance descriptive text and the set of reference scenarios to the first machine learning model, wherein the scenario descriptive text is associated with a reference scenario in the set of reference scenarios.

8. The method of claim 7, wherein generating a scenario image of the scenario where the target object is applied comprises:
obtaining a pose template associated with the reference scenario; and
generating the scenario image based on the pose template and the scenario descriptive text.

9. The method of claim 8, wherein generating the scenario image based on the pose template and the scenario descriptive text comprises:
generating the scenario image by applying the pose template and the scenario descriptive text to a second machine learning model.

10. The method of claim 1, further comprising:
obtaining supplementary information for the target object based on the original descriptive text; and
wherein generating a scenario descriptive text of a scenario where the target object is applied comprises:
generating the scenario descriptive text of the scenario where the target object is applied based on the original descriptive text, the appearance descriptive text and the supplementary information.

11. The method of claim 1, further comprising:
obtaining an image part corresponding to the target object from the original image; and
generating a combined image by splicing the scenario image with the image part for the target object.

12. The method of claim 11, wherein obtaining an image part corresponding to the target object from the original image comprises:
identifying the target object from the original image; and
obtaining the image part corresponding to the target object by segmenting the original image.

13. An apparatus for generating an image, comprising:
a target object information obtaining module configured to obtain target object information for a target object, wherein the target object information comprises an original descriptive text for the target object and an original image of the target object;
an appearance descriptive text determination module configured to determine, based on the original descriptive text and the original image, an appearance descriptive text for the target object;
a scenario descriptive text generation module configured to generate, based on the original descriptive text and the appearance descriptive text, a scenario descriptive text of a scenario where the target object is applied; and
a scenario image generation module configured to generate, based the scenario descriptive text, a scenario image of the scenario where the target object is applied.

14. An electronic device, comprising:
at least one processor; and
a storage apparatus for storing at least one program which, when executed by the at least one processor, causes the at least one processor to perform the method according to any of claims 1-12.

15. A computer-readable storage medium stored thereon with computer programs which, when executed by a processor, cause the processor to perform the method according to any of claims 1-12.

16. A computer program product including computer programs which, when executed by a processor, causes the processor to perform the method according to any of claims 1-12.
